# EUROPEAN PATENT APPLICATION

(11) **EP 2 871 324 A2**
(43) Date of publication of application: **13.05.2015**
(21) Application number: 14192274.0
(22) Date of filing: 07.11.2014
(51) Int. Cl.: F01D 5/14, F01D 5/20, F01D 11/08, F01D 17/16, F01D 5/22

(54) **Axial turbine with an adjustable guide plate**

(30) Priority: 08.11.2013 JP 2013232039
(71) Applicant: Mitsubishi Hitachi Power Systems, Ltd., Yokohama 220-8401 (JP)
(72) Inventor: Fukushima, Hisataka, Yokohama, Kanagawa 220-8401 (JP); Shibata, Takanori, Yokohama, Kanagawa 220-8401 (JP); Segawa, Kiyoshi, Yokohama, Kanagawa 220-8401 (JP); Lee, Goingwon, Yokohama, Kanagawa 220-8401 (JP)
(74) Representative: MERH-IP Matias Erny Reichl Hoffmann

(57) **Abstract**

An axial turbine includes a plurality of ribs 9 provided in such a way as to be sandwiched between the diaphragm outer ring 1 and the axial seal fin 7 in the gap between the shroud 6 and the diaphragm outer ring 1, the ribs 9 being extended from the diaphragm outer ring 1 toward the shroud 6 in the radial direction of the rotor 3 and in the direction of the rotation axis thereof, and a guide plate 10 provided in such a way as to be present along the axial seal fin 7 and a face of the diaphragm outer ring 1, opposed to the rotor 3, so as to be extended in the rotation radial direction of the rotor 3.

## Description

### FIELD OF THE INVENTION

The invention relates to an axial turbine such as a gas turbine and a steam turbine for use in an electric power plant, etc.

### BACKGROUND OF THE INVENTION

The gas turbine, the steam turbine, etc., for use in the electric power plant, etc., are each broadly classified into three categories on the basis of the flow direction of a working fluid thereof, including an axial turbine with the fluid flowing in the direction of the rotation axis of the turbine, a diagonal turbine with the fluid flowing in such a way as to be diagonally spread from the rotation axis of the turbine, and a radial turbine with the fluid flowing in the radial direction of the turbine. The axial turbine, inparticular, among these turbines, is suited for use in an electric power plant with a capacity intermediate through large, in magnitude, and the axial turbine is generally in widespread use at a large-sized thermal power plant.

Incidentally, further enhancement in power generation efficiency has lately been required of the electric power plant from the viewpoint of enhancement in economics, and reduction in environmental load, and the turbine is therefore faced with an important task of achieving higher performance thereof. While factors controlling the performance of the turbine include a stage loss, an exhaust loss, a mechanical loss, etc., it is deemed that reduction in the stage loss, in particular, is most effective for enhancement in the performance of the turbine. This stage loss takes a variety of forms, and is broadly classified into (1) a profile loss attributable to a blade profile itself, (2) a secondary flow loss attributable to a flow crossing a passage between blades, (3) a leakage loss due to a working fluid leaking out of the passage between blades, etc. Among those losses, the leakage loss (3) includes (a) a bypass loss caused by a leakage flow passing through a path other than a path for a main stream, thereby preventing effective use of energy held by steam, (b) a mixing loss occurring at the time of a portion of the leakage flow, breaking off a main stream, flowing back into the main stream again, and (c) an incidence loss caused by interference of a portion of the leakage flow, flowing back into the main stream, with downstream cascade of blades. Accordingly, in order to cause reduction in those leakage losses, it becomes important to cause the leakage flow to return to the main stream without a loss, while reducing a quantity of the leakage flow.

To cope with such a problem, with Japanese Unexamined Patent Application Publication No. 2011-106474 (Patent Literature 1), there has been proposed a technology whereby a guide plate for use in guiding a leakage flow is disposed in a leakage flow path at the tip of a bucket. Further, it is described that if an outflow direction of the leakage flow is caused to match with the direction of a main stream having flowed out from the bucket through the use of the guide plate, this will enable a mixing loss occurring at the time of the leakage flow merging with the main stream be reduced.

Incidentally, Patent Literature 1 has not disclosed a relationship between an operation state of the turbine and the guide plate, and there is a possibility that the effect of turning the direction of the leakage flow through the use of the guide plate cannot be sufficiently secured depending on the operation state of the turbine. In the case where the operation state of the turbine undergoes a change to thereby cause a flow angle of the main stream to change, in particular, an optimum flow angle suitable for installation of the guide plate is changed, and therefore, a mismatch in flow angle between the leakage flow and the main stream is caused to occur as a result of the installation of the guide plate, so that a possibility of fostering the mixing loss contrary to expectations is conceivable.

It is therefore an object of the present invention to provide a highly efficient and high-performance axial turbine capable of matching the outflow direction of a leakage flow with the direction of a main stream in response to an operation state of the turbine, thereby reducing a mixing loss at the time of the leakage flow merging with the main stream.

### SUMMARY OF THE INVENTION

For the purpose of overcoming the problem described as above, the present invention provides in its one aspect an axial turbine including a rotatably supported rotor, a bucket fixed to the rotor, a shroud provided at the tip of the bucket, a diaphragm outer ring opposed to the shroud with a gap interposed therebeteen, a radial seal fin provided in such a way as to protrude from the diaphragm outer ring in the radial direction of the rotor in the gap between the diaphragm outer ring and the shroud, an axial seal fin provided in such a way as to protrude from the diaphragm outer ring in the direction of a rotation axis of the rotor in the gap between the shroud and the diaphragm outer ring, a plurality of ribs provided in such a way as to be sandwiched between the diaphragm outer ring and the axial seal fin in the gap between the shroud and the diaphragm outer ring, the ribs being extended from the diaphragm outer ring toward the shroud in the radial direction of the rotor and in the direction of the rotation axis thereof; and/or a guide plate provided in such a way as to be present along the axial seal fin and a face of the diaphragm outer ring, opposed to the rotor, so as to be extended in the rotation radial direction of the rotor.

With the present invention, it is possible to provide a highly efficient and high-performance axial turbine capable of matching the outflow direction of a leakage flow with the direction of a main stream in response to an operation state of the turbine, thereby reducing the mixing loss at the time of the leakage flow merging with the main stream.

Other problems, configurations, and effects of the present invention will be apparent from the following description of the embodiments.

### BRIEF DESCRIPTION OF THE DRAWINGS

Fig. 1 is a sectional view schematically showing a part of a steam turbine according to one embodiment of the invention;
Fig. 2 is a sectional view schematically showing a part of the steam turbine according to the one embodiment of the invention;
Fig. 3 is a view schematically showing a state between blades, and a state of a leakage flow between the blades, on a blade-tip side of the steam turbine according to the one embodiment of the invention;
Fig. 4 is a sectional view schematically showing the state of the leakage flow, on the blade-tip side of the steam turbine according to the one embodiment of the invention;

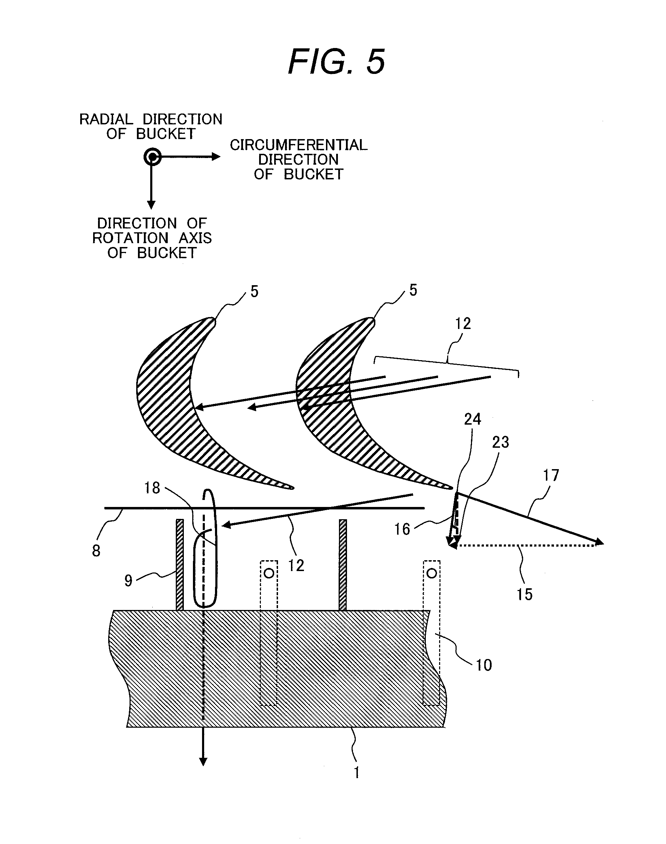

Fig. 5 is a view schematically showing the state between the blades, and the state of the leakage flow between the blades, on the blade-tip side of the steam turbine according to the one embodiment of the invention;
Fig. 6 is a view schematically showing a state of the leakage flow, on the downstream side of a bucket tip, inside a cavity of the steam turbine according to the one embodiment of the invention;
Fig. 7 is a graph showing effects of a deviation angle, that is, a difference in flow angle between the main-stream and the leakage flow, exerted on a mixing loss according to the one embodiment of the invention;
Fig. 8 is a graph showing effects of the leakage flow of the steam turbine according to the one embodiment of the invention, exerted on distribution of absolute discharge-angles downstream from a bucket, in the radial-direction of the bucket;
Fig. 9 is a graph showing effects of the leakage flow of the steam turbine according to the one embodiment of the invention, exerted on distribution of bucket loss factors downstream from the bucket, in the radial-direction of the bucket;
Fig. 10 is a sectional view schematically showing a part of a steam turbine according to the one embodiment of the invention;
Fig. 11 is a sectional view schematically showing a part of the steam turbine according to the one embodiment of the invention; and
Fig. 12 is a plan view schematically showing a part of the steam turbine according to the one embodiment of the invention.

### DETAILED DESCRIPTION OF THE PREFERRED EMBODIMENTS

Embodiments of the present invention are described below with reference to the accompanied drawings. Each element, equivalent to that throughout respective figures, is denoted by the same reference sign. With the respective embodiments described below, the present invention is described by taking the case where the present invention is applied to a steam turbine, as an example, however, the present invention has the same function effect even in the case of a gas turbine where a working fluid differs from that in the case of the steam turbine. Thus, the present invention is applicable to axial turbines in general. Further, part in some figures is depicted in size exaggerated for the purpose of assisting easy understanding of a configuration with respect to the respective embodiments of the present invention.

### [First Embodiment]

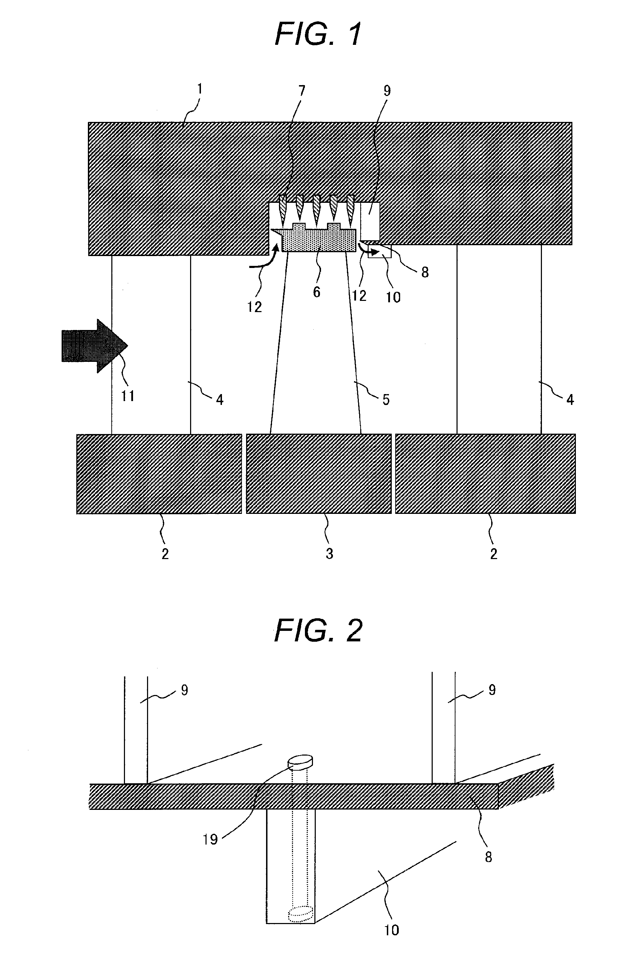

Figs. 1 and 2 each show a stage structure of a steam turbine according to a first embodiment of the invention. A turbine-stage of the steam turbine according to the present embodiment is provided with a rotatably supported rotor 3, a bucket 5 fixed to the rotor 3, a shroud 6 provided at the tip of the bucket 5, a diaphragm outer ring 1 opposed to the shroud 6 with a gap provided therebetween, a radial seal fin 7 provided in such a way as to protrude from the diaphragm outer ring 1 in the radial direction of the rotor 3 in a gap between the shroud 6 and the diaphragm outer ring 1, an axial seal fin 8 provided in such a way as to protrude from the diaphragm outer ring 1 in the direction of a rotation axis of the rotor 3 in a gap between the shroud 6 and the diaphragm outer ring 1, a plurality of ribs 9 provided in such a way as to be sandwiched between the diaphragm outer ring 1 and the axial seal fin 8 and to be extended from the diaphragm outer ring 1 towards the shroud 6 in the radial direction of the rotor 3 and in the direction of the rotation axis thereof, respectively, in the gap between the shroud 6 and the diaphragm outer ring 1, and a guide plate 10 provided in such a way as to be present along the axial seal fin 8 and a face of the diaphragm outer ring 1, opposed to the rotor 3, respectively, so as to be extended in the rotation radial direction of the rotor 3.

Further, the guide plate 10 is provided such that the position thereof is variable in the circumferential direction of the rotor 3 in response to an operation state of the steam turbine.

Still further, the guide plate 10, and the axial seal fin 8 each have a hole penetrating therethrough along the radial direction of the rotor 3, and the guide plate 10 is linked to the axial seal fin 8 with the use of a guide plate support-member 19 provided inside the respective holes.

Yet further, the hole of the guide plate 10 is provided at a position closer to a side of the guide plate 10, adjacent to the shroud 6, than the central part of the guide plate 10.

Further, a face of the guide plate 10, opposed to the rotor 3, is disposed on a side of the guide plate 10, inner than a face of the shroud 6, adjacent to the bucket 5, along the radial direction of the rotor 3.

A turbine stage of the steam turbine according to the present embodiment is made up of one sheet of the bucket 5, or plural sheets of the buckets 5, fixed to the rotor 3, in the circumferential direction thereof, and one sheet of nozzle 4, or plural sheets of the nozzles 4, fixed to the turbine in the circumferential direction thereof, between the diaphragm outer ring 1 and a diaphragm inner ring 2. The shroud 6 is provided at the tip of the bucket 5, on the outer periphery side thereof in a rotation radial direction of the turbine. Further, a rotating body, in other words, plural sheets of the radial seal fins 7 for the purposes of minimizing a gap between the shroud 6 and a stationary part, that is, the diaphragm outer ring 1, and suppressing the leakage flow are provided in the direction of the rotation axis of the rotor 3 inside the gap between a casing wall of the shroud 6 provided at the tip of the bucket 5, on the outer peripheral side of the shroud 6, and the stationary part opposed to the casing wall of the shroud, that is, the diaphragm outer ring 1. Still further, the axial seal fin 8 is provided between a casing wall of the shroud 6, on the downstream side thereof, that is, the casing wall of the shroud 6, on the downstream side of a steam flow and the stationary part opposed to the casing wall of the shroud 6, that is, the diaphragm outer ring 1, and a void, the so-called cavity, is formed between the shroud 6 and the stationary part, that is, the diaphragm outer ring 1, and between the shroud 6 and the radial seal fin 7 provided on the most downstream side, in a seal passage. Further, the axial seal fin 8 is provided with the guide plate 10 for causing the direction of the leakage flow to be turned into the circumferential direction, and the guide plate 10 is installed such that the same can be driven in the circumferential direction of the rotor 3.

A steam main-stream 11, as a working fluid, flows out from the nozzle 4 provided on the upstream side of the bucket 5, in the direction of a steam flow, the majority of the steam main-stream 11 having flowed out flows into the bucket 5, whereas a portion thereof flows into the seal passage formed between the diaphragm outer ring 1, as the stationary part, and the shroud 6, as a rotator. And the portion, as a leakage flow 12, passes between the plural sheets of the radial seal fins 7 to be subsequently merged with the steam main-stream 11 again downstream from the bucket 5. The steam turbine causes the steammain-stream 11 having flowed out from the nozzle 4 provided upstream from the bucket 5 to flow into the bucket 5, causing the rotor 3 with the bucket 5 fixed thereto, together with the bucket 5, to be rotated, thereby executing power generation through conversion of rotation energy into electric energy via a generator (not shown) connected to an end of the rotor 3. Accordingly, the leakage flow 12 having passed through the seal passage after circumventing the bucket 5, as it is, is not converted into the rotation energy of the rotor 3, and therefore, the leakage flow 12 represents a loss.

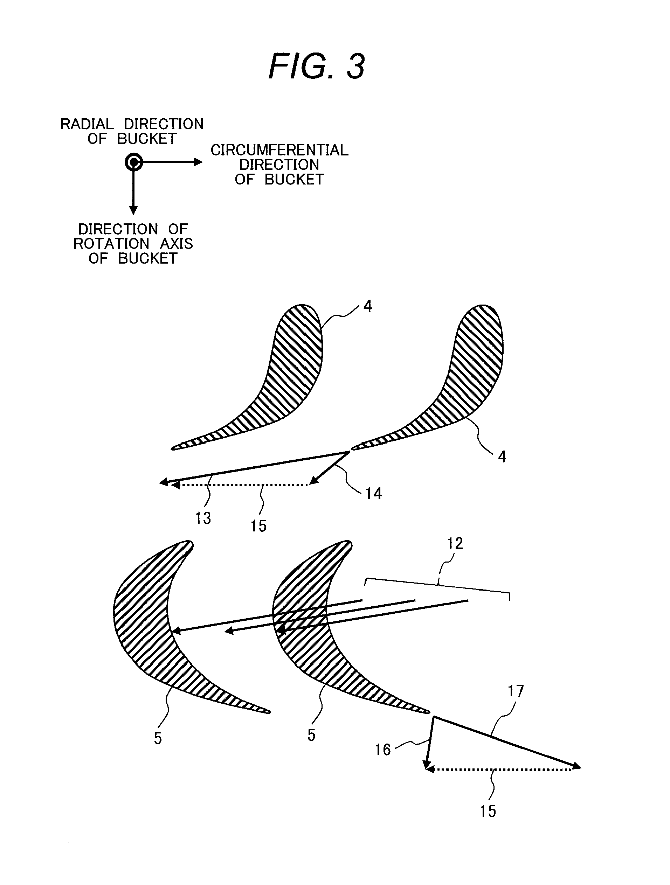

In this connection, in order to assist easy understanding of the function effect of the invention, in the case of the present embodiment, there are described below a state between blades, that is, between the nozzle and the bucket, and a state of the leakage flow, with reference to Fig. 3. Fig. 3 shows blade profiles as seen from the tip side of the bucket 5, and a velocity triangle. In Fig. 3, a broken line denoted by reference sign 15 indicates a rotational speed. The steam main-stream 11 (not shown) flowing out from the back-edge of the nozzle 4 at a nozzle-outlet absolute velocity 13 flows into the bucket 5 as a nozzle-outlet relative velocity 14. Thereafter, the steam main-stream 11 is turned in flow angle at the bucket 5 to flow out at a bucket-outlet relative velocity 17. At this point in time, the flow has been turned into a flow at a bucket-outlet absolute velocity 16, in a direction close to the axial direction, thereby lowering pressure and temperature to the extent of energy recovered by the bucket 5, before flowing into the next stage.

On the other hand, the leakage flow 12 circumventing the bucket 5 is turned into a contracted flow upon passing between the plural sheets of the radial seal fins 7 (not shown) provided in the axial direction, whereupon total pressure drops and an axial velocity increases, however, the leakage flow 12 passes through the seal passage at a circumferential velocity nearly maintaining a circumferential velocity component at the time of flowing out from the nozzle 4, owing to the law of conservation of each momentum. More specifically, the leakage flow 12 flows out without being turned in the seal passage, as show in Fig. 3, so that mismatch between the flow angles will occur upon the leakage flow 12 being merged with the steam main-stream 11. The mixing loss occurring upon the steam main-stream 11 merging with the leakage flow 12 is fostered due to the mismatch between the flow angles.

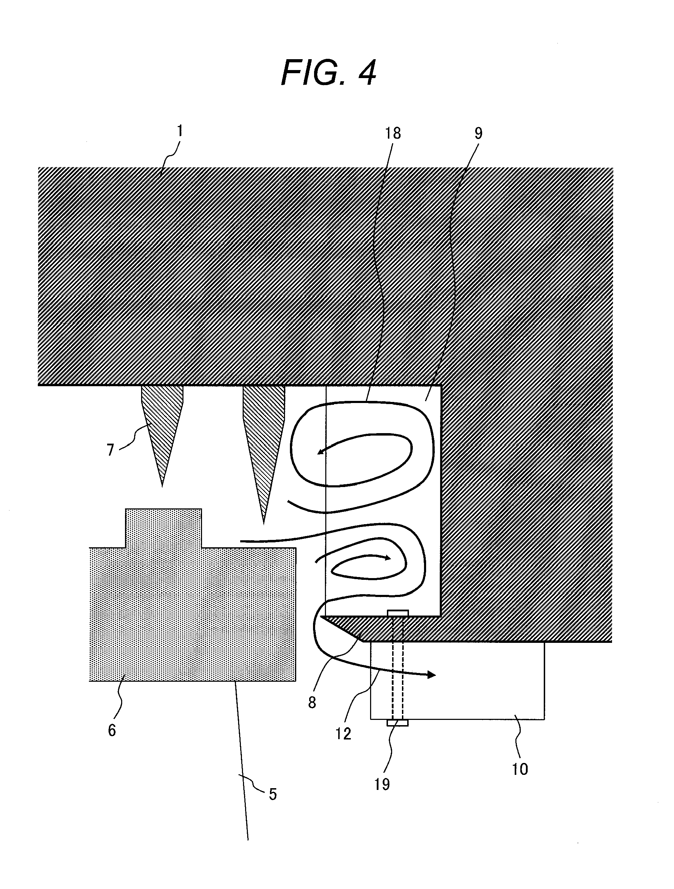

The configuration as well as the function of the present embodiment is described in detail below with reference to Figs . 4 through 7. Fig. 4 shows the state of a leakage flow on the blade-tip side according to the present invention. The plural sheets of the radial seal fins 7 arranged in the direction of the rotation axis of the rotor 3 are provided between the diaphragm outer ring 1 and the shroud 6 provided at the tip of the bucket 5. The radial seal fins 7 has a sectional shape that is rotationally symmetric with respect to the rotation axis of the rotor 3, the tip of the radial seal fin 7 being acute wedge-like in shape . A gap is provided between the radial seal fin 7 and the casing wall of the shroud 6, on the outer peripheral side thereof in order to prevent a rotating part, that is, the shroud 6 from coming into contact with the stationary part, that is, the diaphragm outer ring 1. The leakage flow 12, upon passing through the gap, undergoes contraction and expansion, whereupon the total pressure drops due to heat diffusion of velocity energy. This contraction and expansion phenomenon acts as resistance to the leakage flow 12 to thereby enable a quantity of the leakage flow 12 to be reduced. With the present embodiment, there is adopted a structure such that the radial seal fins 7 are fixed to the diaphragm outer ring 1, and the tip of the radial seal fin 7 is directed to a side of the bucket 5, adjacent to the shroud 6, however, in contrast, even if the radial seal fins 7 are fixed to the shroud 6, and the tip of the radial seal fin 7 is directed toward the diaphragm outer ring 1, the same effect can be obtained. Furthermore, although the casing wall of the shroud 6, on the outer peripheral side thereof, is formed in a step-wise shape, the effects of the present invention will be the same even if other shapes including a flat shape are adopted.

The axial seal fin 8 is provided on the downstream side of the radial seal fins 7. The axial seal fin 8 is provided in such a way as to protrude in the direction of the rotation axis of the rotor 3 in the seal passage between the casing wall of the shroud 6, on the downstream side thereof, and the stationary part, that is, the diaphragm outer ring 1. The voids, the so-called cavities, are formed by the axial seal fin 8, together with the shroud 6, the stationary part, that is, the diaphragm outer ring 1, and the radial seal fin 7 provided on the most downstream side of the seal passage, and the leakage flows 12 having flowed into the respective cavities generate two pairs of strong recirculation flows 18. The leakage flow 12 is under the influence of viscosity from the surrounding wall-faces forming the respective cavities in the process of the leakage flow 12 circulating in the respective cavities, whereupon a circumferential-velocity component thereof is attenuated. The plural ribs 9 for causing the circumferential velocity to be reduced are discretely provided at a given intervals inside the cavity. The ribs 9 each are a thin sheet for stretching the interior of the cavity in the direction of the rotation axis of the rotor 3, and are fixed to the stationary part, that is, the diaphragm outer ring 1. Herein, if the ribs 9 are installed at equal intervals, and at circumferential pitches identical to those of the buckets in the circumferential direction (in other words, the number of the ribs is identical to that of the buckets), this will enable the circumferential velocity of the leakage flow 12 to be more effectively reduced.

The leakage flow 12 having flowed into the cavity comes into collision with the ribs 9 to be turned in flow-angle to be then oriented in the direction of the rotation axis of the rotor 3, thereby forming the recirculation flows 18 . As a result, the leakage flow 12 can be caused to flow out in the direction of the rotation axis of the rotor 3. Accordingly, upon the leakage flow 12 flowing out from the cavity to merge with the steam main-stream 11 (not shown), the mismatch between flow angles has already been eased, so that the mixing loss can be effectively reduced. In addition, the axial seal fin 8 has the effect of preventing the steam main-stream 11 at a high pressure from flowing back into the cavity, and the mixing loss can be still further reduced owing to this effect.

With the present embodiment, the axial seal fin 8 is further provided with the guide plate 10. The guide plate 10, and the axial seal fin 8 are each provided with the hole penetrating therethrough along the rotation radial direction of the rotor 3, and the guide plate 10 is held to the axial seal fin 8 by the guide plate support-member 19. Since the guide plate support-member 19 is provided on an upstream side of the guide plate 10, more than the center thereof, that is, on the upstream side of the steam main-stream 11, thereby allowing the guide plate 10 to protrude as far as the steam main-stream 11 larger in mass flow rate than the leakage flow 12, that is, up to the inner periphery side of the shroud 6, the guide plate 10 will be spontaneously oriented in the same direction as that of the steam main-stream 11 owing to interference with the steam main-stream 11, which is as changeable as a weathercock.

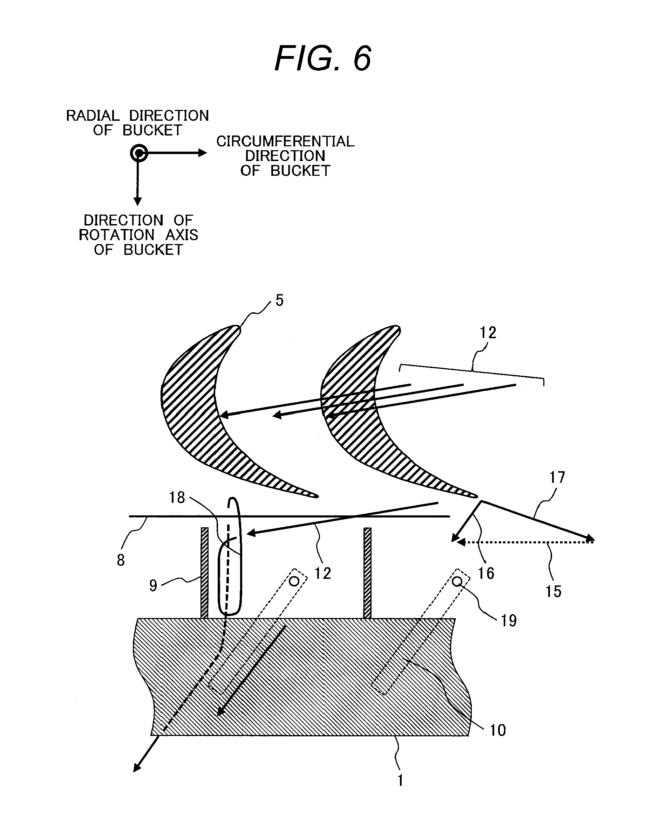

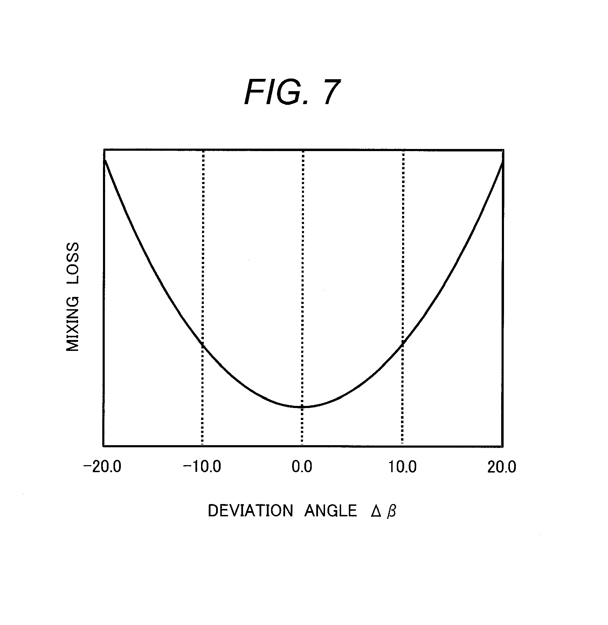

There is the case where the steam main-stream 11 having flowed out from the outlet of the bucket 5 is not oriented in the direction of the rotation axis of the rotor 3 depending on the operation state of the turbine, as shown in Fig. 6. Accordingly, if the guide plate 10 is not installed, the leakage flow 12 whose circumferential-velocity component has turned substantially zero by the agency of the ribs 9 will merge with the steam main-stream 11 in a different direction, thereby creating the cause of fostering the mixing loss. As a result, a difference in flow angle between the leakage flow 12 and the steam main-stream 11, that is, a deviation angle 24 increases, as shown in Fig. 7, resulting in an increase of the mixing loss, thereby creating the cause of deterioration in stage efficiency.

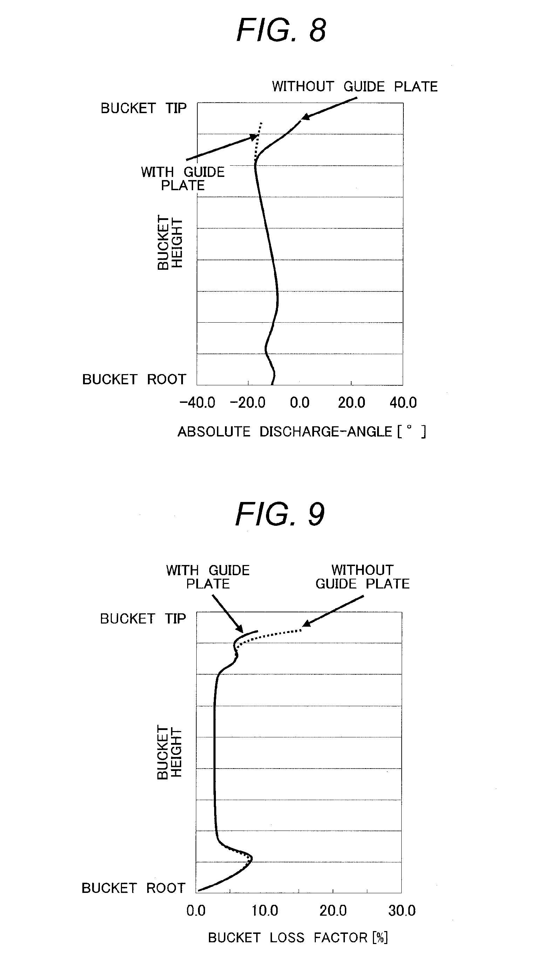

Figs. 8, and 9 each show a difference in distribution of absolute discharge-angles downstream from the bucket 5 between the presence and absence with respect to the guide plate 10 in the case where the operation state of the turbine is changed. In the case where the guide plate 10 is not provided, the leakage flow 12 whose circumferential-velocity component has turned substantially zero will differ in flow angle from the steam main-stream 11 owing to the effects of the ribs 9, so that variation in flow angle distribution in the vicinity of a blade tip will increase. On the other hand, in the case where the guide plate 10 is provided, the flow angle of the leakage flow 12 can be matched with the flow angle of the steam main-stream 11, so that the deviation angle 24 between the leakage flow 12 and the steam main-stream 11 can be kept small regardless of the operation state of the turbine, and therefore, the variation in the flow angle distribution in the vicinity of the blade tip can be further suppressed. Accordingly, the mixing loss resulting from mixing of the steam main-stream 11 with the leakage flow 12 becomes smaller. As a result, a loss at the bucket, including the mixing loss from mixing of the steam main-stream 11 with the leakage flow 12, can be reduced at the tip-part of the bucket, as shown in Fig. 9, thereby enhancing the stage efficiency of a stage where the present invention is applied.

Accordingly, with the present embodiment, it is possible to reduce not only a bypass loss by suppressing a quantity of the leakage flow 12 but also the mixing loss by preventing the steam main-stream from flowing into the cavity, by removing the circumferential velocity component, and by suppressing the mismatch between the flow angles at the time of the leakage flow 12 merging with the steam main-stream 11 through the turning of the flow angle of the leakage flow 12 with the use of the guide plate 10, so that the leakage loss can be effectively reduced regardless of the operation state of the turbine.

In addition, a distribution of flow angles in a blade-height direction is rendered uniform due to the suppression of the mismatch between the flow angles at the time of the leakage flow 12 merging with the steam main-stream 11, so that a flow toward the nozzle 4 in a subsequent stage can be rectified so as to be oriented in the blade height direction. As a result, the incidence loss can be reduced, thereby enabling a leakage flow loss to be effectively reduced.

With the present embodiment, the ribs 9 and the guide plates 10 are respectively installed at equal intervals in the same circumferential direction as that of the bucket 5, (that is, the number thereof is the same as that of the bucket 5), however, even if the number thereof is less than that of the bucket 5, the same effect can be obtained depending on the circumferential velocity imparted by the nozzle 4.

### Second Embodiment

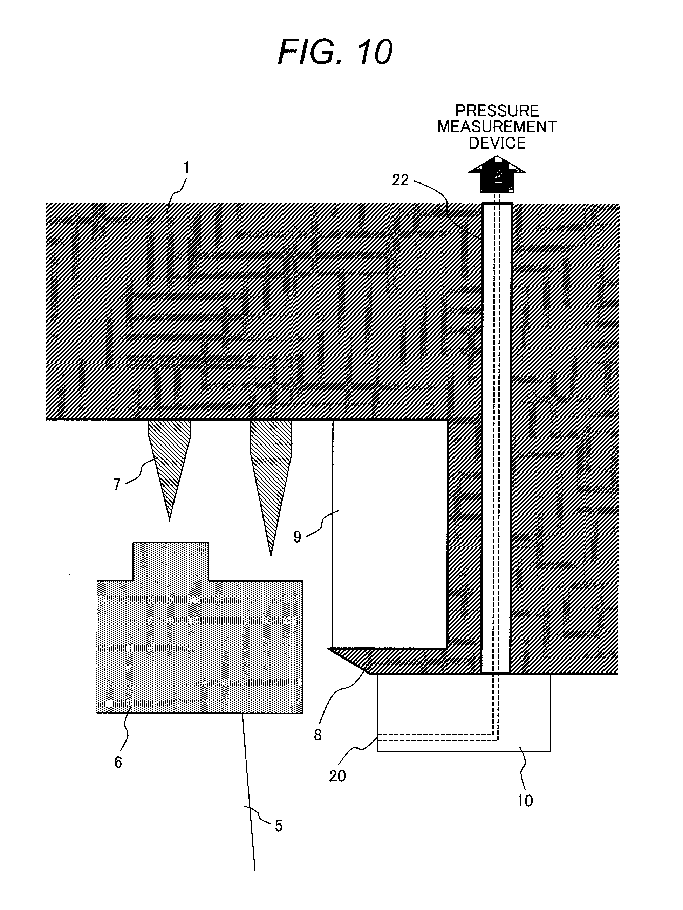

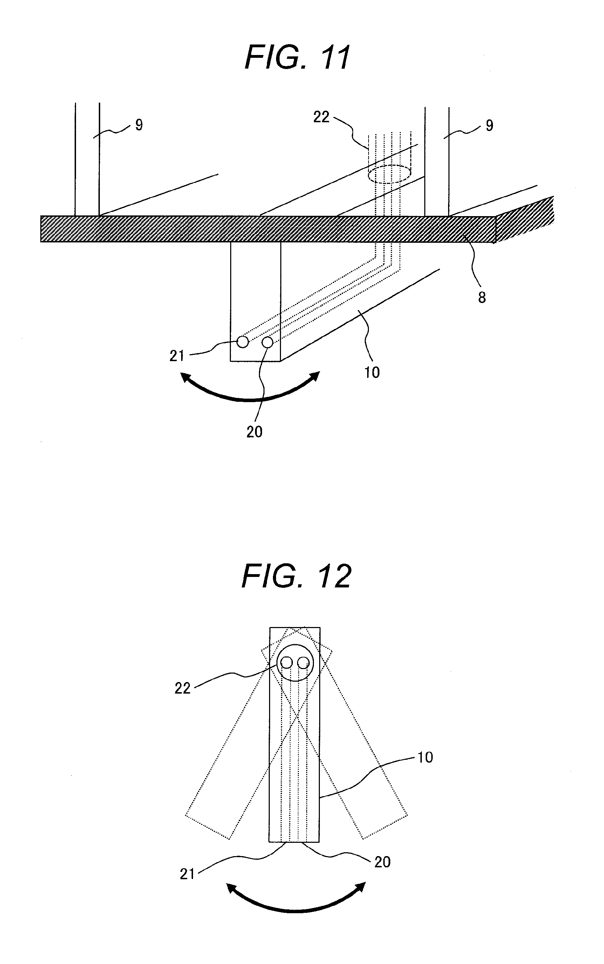

Figs. 10, and 11 each show a stage structure of a steam turbine according to a second embodiment of the invention. Further, Fig. 12 is a plan view of a guide plate 10 shown in Fig. 11. A turbine stage of the steam turbine according to the present embodiment is provided with a rotatably supported rotor 3, a bucket 5 fixed to the rotor 3, a shroud 6 provided at the tip of the bucket 5, a diaphragm outer ring 1 opposed to the shroud 6 with a gap provided therebetween, a radial seal fin 7 provided in such a way as to protrude from the diaphragm outer ring 1 in the radial direction of the rotor 3 in a gap between the shroud 6 and the diaphragm outer ring 1, an axial seal fin 8 provided in such a way as to protrude from the diaphragm outer ring 1 in the direction of the rotation axis of the rotor 3 in the gap between the shroud 6 and the diaphragm outer ring 1, a plurality of ribs 9 provided in such a way as to be sandwiched between the diaphragm outer ring 1 and the axial seal fin 8 in the gap between the shroud 6 and the diaphragm outer ring 1, the ribs 9 being extended from the diaphragm outer ring 1 toward the shroud 6 in the radial direction of the rotor 3 and in the direction of the rotation axis thereof; and a guide plate 10 provided in such a way as to be present along the axial seal fin 8 and a face of the diaphragm outer ring 1, opposed to the rotor 3, so as to be extended in the rotation radial direction of the rotor 3, a first static pressure hole 20, and a second static pressure hole 21, provided side by side in the circumferential direction of the rotor 3, on a face of the guide plate 10, opposed to the bucket 5, a pressure measurement device connected to the first static pressure hole 20, and the second static pressure hole 21, respectively, and a pipe 22 serving as a guide-plate driving device for varying the position of the guide plate 10.

Further, there is provided the pipe 22 serving as the guide-plate driving device for varying the position of the guide plate 10 on the basis of data of the pressure measurement device .

Still further, a face of the guide plate 10, opposed to the rotor 3, is disposed on a side of the guide plate 10, inner than a face of the shroud 6, adjacent to the bucket 5, along the radial direction of the rotor 3.

Yet further, the pipe 22 serving as the guide-plate driving device is provided so as to cover the first static pressure hole 20, and the second static pressure hole 21.

The pipe 22 serving as the guide-plate driving device is provided at a position closer to a face on the opposite side of the face provided with the first static pressure hole 20, and the second static pressure hole 21, than the center part of the guide plate 10.

A turbine stage of the steam turbine according to the present embodiment is provided with the pipe 22 serving as the guide-plate driving device for driving the guide plate 10 in the circumferential direction, while holding the guide plate 10 having the two static pressure holes 20, 21 in the diaphragm outer ring 1.

The configuration as well as the function effect of the second embodiment is described below by focusing attention on a point where the second embodiment differs from the first embodiment. As described in the first embodiment, there is the case where the steam main-stream 11 having flowed out from the outlet of the bucket 5 is not oriented in the direction of the rotation axis of the rotor 3 depending on the operation state of the turbine. Accordingly, if the guide plate 10 is not installed, the leakage flow 12 whose circumferential-velocity component has turned substantially zero will merge with the steam main-stream 11 in a direction differing from the direction in which the steam main-stream 11 is oriented, thereby creating the cause of fostering the mixing loss.

The second embodiment is made up such that the two static pressure holes 20, 21 provided in the guide plate 10 disposed in such a way as to protrude as far as the steam main-stream 11, on the inner periphery side thereof, still inner than the shroud 6, are connected to the pressure measurement device provided outside the turbine, thereby enabling the state of the steam main-stream 11 to be monitored at all times. Accordingly, with the second embodiment, the flow angle of the steam main-stream 11 is identified from a difference in pressure between the two static pressure holes 20, 21, and the guide plate 10 can be rotated in the circumferential direction so as to be oriented in the direction of the steam main-stream 11 via the pipe 22 serving as the guide-plate driving device. In consequence, the deviation angle between the leakage flow 12 and the steam main-stream 11 can be kept small regardless of the operation state of the turbine, so that the mixing loss resulting from mixing of the steam main-stream 11 with the leakage flow 12 becomes smaller, and the bucket loss including the mixing loss from mixing of the steam main-stream 11 with the leakage flow 12 can be reduced at the bucket-tip part. Thus, the stage efficiency of the stage with the present invention applied thereto is enhanced.

Now, it is to be pointed out that the invention be not limited to the embodiments described as above and that the invention may include various changes and modifications. For example, the embodiments described as above are explained about in detail simply for the purposes of assisting easy understanding of a configuration with respect to the respective embodiments of the invention, and it therefore is to be understood that the invention is not necessarily limited to the embodiments having all the structures as described. Further, a part of the structures of some of the embodiments can be replaced with a structure of another embodiment. Still further, addition • depletion replacement by use of another structure can be applied to the structure of each of the embodiments described as above.

Further, the first embodiment shows an example whereby the guide plate 10 is controlled through the interference with the steam main-stream 11, which is as changeable as the weathercock, while the second embodiment shows an example whereby the flow angle of the steam main-stream 11 is identified from the difference in pressure between the two static pressure holes 20, and 21, thereby mechanically controlling the guide plate 10 via the pipe 22 serving as the guide-plate driving device, however, it is to be understood that the present invention is capable of securing the same effects even with the use of other guide-plate control mechanism. Thus, the advantageous effects of the invention is not dependent on the form of the control mechanism.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

### List of Reference Signs

1... diaphragm outer ring, 2...diaphragm inner ring,
3 ... rotor, 4... nozzle, 5... bucket, 6 ... shroud,
7... radial seal fin, 8...axial seal fin, 9...ribs,
10 ... guide plate, 11... steam main-stream,
12...leakage flow, 13...nozzle-outlet absolute velocity, 14... nozzle-outlet relative velocity,
15...rotational speed, 16...bucket-outlet absolute velocity,
17...bucket-outlet relative velocity,
18...recirculation flow, 19...guide plate support-member, 20... static pressure hole 1,
21...static pressure hole 2, 22... pipe,
23... a leakage flow direction at the time of the leakage flow merging with the main stream,
24 ... deviation angle

## Claims

1. An axial turbine comprising:
a rotatably supported rotor (3);
a bucket (5) fixed to the rotor (3);
a shroud (6) provided at the tip of the bucket (5);
a diaphragm outer ring (1) opposed to the shroud with a gap interposed therebeteen;
a radial seal fin (7) provided in such a way as to protrude from the diaphragm outer ring (1) in the radial direction of the rotor (3) in the gap between the diaphragm outer ring (1) and the shroud (6);
an axial seal fin (8) provided in such a way as to protrude from the diaphragm outer ring (1) in the direction of a rotation axis of the rotor (3) in the gap between the shroud (6) and the diaphragm outer ring (1);
a plurality of ribs (9) provided in such a way as to be sandwiched between the diaphragm outer ring (1) and the axial seal fin (8) in the gap between the shroud (6) and the diaphragm outer ring (1), the ribs (9) being extended from the diaphragm outer ring (1) toward the shroud (6) in the radial direction of the rotor (3) and in the direction of the rotation axis thereof; and
a guide plate (10) provided in such a way as to be present along the axial seal fin (8) and a face of the diaphragm outer ring (1), opposed to the rotor (3), so as to be extended in the rotation radial direction of the rotor (3).

2. The axial turbine according to claim 1, wherein the position of the guide plate (10) is variable in the circumferential direction of the rotor (3) in response to an operation state of the axial turbine.

3. The axial turbine according to claims 1 or 2, wherein the guide plate (10) and the axial seal fin (8) are each provided with a hole penetrating therethrough along the rotation radial direction of the rotor (3) , and the guide plate (10) is linked to the axial seal fin (8) with the use of a guide plate support-member (19).

4. The axial turbine according to any of claims 1 to 3, wherein the hole of the guide plate (10) is provided at a position on a side of the guide plate (10), closer to the shroud (6) than the central part of the guide plate (10).

5. The axial turbine according to any of claims 1 to 4, wherein a face of the guide plate (10), opposed to the rotor (3), is disposed on a side of the guide plate (10), inner than a face of the shroud (6), adjacent to the bucket (5), along the radial direction of the rotor (3).

6. An axial turbine comprising:
a rotatably supported rotor (3);
a bucket (5) fixed to the rotor (3);
a shroud (6) provided at the tip of the bucket (5);
a diaphragm outer ring (1) opposed to the shroud (6) with a gap interposed therebeteen;
a radial seal fin (7) provided in such a way as to protrude from the diaphragm outer ring (1) in the radial direction of the rotor in the gap between the diaphragm outer ring and the shroud (6);
an axial seal fin (8) provided in such a way as to protrude from the diaphragm outer ring (1) in the direction of a rotation axis of the rotor (3) in the gap between the shroud (6) and the diaphragm outer ring (1);
a plurality of ribs (9) provided in such a way as to be sandwiched between the diaphragm outer ring (1) and the axial seal fin (8) in the gap between the shroud (6) and the diaphragm outer ring (1), the ribs (9) being extended from the diaphragm outer ring (1) toward the shroud (6) in the radial direction of the rotor (3) and in the direction of the rotation axis thereof;
a guide plate (10) provided in such a way as to be present along the axial seal fin (8) and a face of the diaphragm outer ring (1), opposed to the rotor (3), so as to be extended in a rotation radial direction of the rotor (3);
a first static pressure hole, and a second static pressure hole, provided side by side in the circumferential direction of the rotor (3), on a face of the guide plate (10), opposed to the bucket (5);
a pressure measurement device connected to the first static pressure hole, and the second static pressure hole, respectively; and
a guide-plate driving device for varying the position of the guide plate (10).

7. The axial turbine according to claim 6 or 11, wherein the position of the guide plate is varied via the guide-plate driving device on the basis of data of the pressure measurement device.

8. The axial turbine according to claim 6 or 7, wherein a face of the guide plate (10), opposed to the rotor (3), is disposed on a side of the guide plate (10), inner than a face of the shroud (6), adjacent to the bucket (5), along the radial direction of the rotor (3).

9. The axial turbine according to at least one of claims 6 to 8 and 11, wherein the guide-plate driving device is provided so as to cover the first static pressure hole and the second static pressure hole.

10. The axial turbine according to at least one of claims 6 to 9 and 11, wherein the guide-plate driving device is provided at a position closer to a face on the opposite side of the face provided with the first static pressure hole and the second static pressure hole, than the center part of the guide plate (10).

11. The axial turbine according to claim 1, **characterized by**
a first static pressure hole, and a second static pressure hole, provided side by side in the circumferential direction of the rotor (3), on a face of the guide plate (10), opposed to the bucket (5);
a pressure measurement device connected to the first static pressure hole, and the second static pressure hole, respectively; and
a guide-plate driving device for varying the position of the guide plate (10).
